# EUROPÄISCHE PATENTSCHRIFT

(11) **EP 1 915 599 B1**
(45) Veröffentlichungstag und Bekanntmachung des Hinweises auf die Patenterteilung: **23.11.2016**
(21) Anmeldenummer: 06761725.8
(22) Anmeldetag: 29.06.2006
(51) Int. Cl.: G01K 1/14, B60H 1/00

(54) **SENSORANORDNUNG ZUR TEMPERATURMESSUNG**
SENSOR ARRANGEMENT FOR TEMPERATURE MEASUREMENT
DISPOSITIF DE DETECTION POUR MESURER LA TEMPERATURE

(30) Priorität: 13.08.2005 DE 102005038466
(43) Veröffentlichungstag der Anmeldung: 30.04.2008
(73) Patentinhaber: Sitronic Ges. für elektrotechnische Ausrüstung mbH & Co. KG, 71116 Gärtringen (DE)
(72) Erfinder: MAU, Gert, 71134 Aidlingen (DE); RAAB, Christoph, 70199 Stuttgart (DE); STAUSS, Gerold, 71083 Herrenberg (DE)
(74) Vertreter: Kohler Schmid Möbus Patentanwälte
(86) Internationale Anmeldenummer: PCT/DE2006/001121
(87) Internationale Veröffentlichungsnummer: WO 2007/019817

(56) Entgegenhaltungen:
- EP-A2- 1 380 481
- WO-A-2006/108367
- DE-A1- 10 214 368
- DE-T2- 69 907 493
- US-A1- 2005 178 200

## Beschreibung

Die Erfindung betrifft eine Sensoranordnung zur Messung der Temperatur einer Oberfläche.

Derartige Sensoranordnungen, vorzugsweise zur Temperaturmessung von näherungsweise planen Oberflächen, sind verschiedentlich bekannt.

Aus der DE 699 07 493 T2 ist ein Oberflächentemperaturfühler bekannt, bei dem ein Wärme leitendes Oberflächenkontaktteil mit Hilfe einer Feder gegen die zu messende Oberfläche gedrückt wird. Das Oberflächenkontaktteil enthält einen elektrisch isoliert angebrachten Temperatursensor.

Aus der DE 102 27 454 A1 ist ein Anlegetemperaturfühler bekannt, bei dem ein Anlegeteil mit Hilfe einer Wärmeleitfolie und Wärmeleitpaste thermisch leitend an die zu messende Oberfläche angebunden ist. An das Anlegteil ist mit Hilfe einer weiteren Wärmeleitfolie ein Temperatursensor angekoppelt.

Die DE 102 14 368 A1 offenbart einen Oberflächentemperatursensor für eine Akku-Zelle. Der Temperatursensor der DE'368 ist mittels eines flexiblen Wärmeleitelement mit der Oberfläche der Akku-Zelle verbindbar.

Der Erfindung liegt die Aufgabe zugrunde, eine kostengünstige Sensoranordnung zu schaffen, mit der die Temperatur einer näherungsweise ebenen Oberfläche, insbesondere einer Scheibe, erfasst werden kann.

Diese Aufgabe wird erfindungsgemäß durch die Sensoranordnung des Anspruchs 1 gelöst. Die abhängigen Ansprüche stellen bevorzugte Ausführungsformen der Erfindung dar.

Die erfindungsgemäße Sensoranordnung zur Temperaturmessung einer Oberfläche weist einen auf einem Schaltungsträger angebrachten Temperatursensor auf, der im Bereich einer Stirnseite des Schaltungsträgers in unmittelbarer Nähe zu der Oberfläche positioniert ist, wobei zwischen der Oberfläche und dem Schaltungsträger ein flexibles Wärmeleitelement angebracht ist.

Die Anbringung des Temperatursensors unmittelbar auf dem Schaltungsträger reduziert die Kosten der Sensoranordnung, da keine zusätzlichen Verbindungselemente benötigt werden. Der Schaltungsträger steht durch ein Wärmeleitelement mit der Oberfläche in Verbindung, wobei die Stirnseite des Schaltungsträgers bevorzugt näherungsweise parallel zur Oberfläche ausgerichtet ist. Dadurch kann die Wärme von der Oberfläche auf den Schaltungsträger und von dort auf den Temperatursensor übertragen werden. Das Wärmeleitelement ist flexibel ausgelegt, sodass es mechanische Beanspruchungen aufnehmen kann, wodurch eine Beschädigung des Schaltungsträgers oder des Temperatursensors beim Ein- oder Ausbau oder dem Betrieb vermieden werden kann.

In einer besonders bevorzugten Ausführungsform weist das flexible Wärmeleitelement eine mit der zu messenden Oberfläche in Kontakt stehende Vorderseite und eine mit dem Schaltungsträger flächig in Kontakt stehende Seite auf.

Die Vorderseite des flexiblen Wärmeleitelements ist bevorzugt mit einer glatten und zumindest an den Rändern abgerundeten Oberfläche ausgeführt. Dadurch ermöglicht sie es, dass die Sensoranordnung entlang der zu messenden Oberfläche gleitend verschoben bzw. gedreht werden kann, was insbesondere beim Ein- oder Ausbau der Sensoranordnung von Vorteil ist, z.B. wenn der Schaltungsträger mittels eines Bajonettverschlusses befestigt wird.

In einer bevorzugten Weiterbildung besteht das flexible Wärmeleitelement aus einem gut Wärme leitenden Metall, insbesondere Kupfer oder Aluminium oder Legierung, insbesondere Messing oder Bronze. Das flexible Wärmeleitelement kann in diesem Fall die Wärme besonders gut auf den Schaltungsträger übertragen. Außerdem sind Wärmeleiter aus diesen Materialien besonders kostengünstig herzustellen.

In einer besonders bevorzugten Weiterbildung weist das Wärmeleitelement ein federndes Element auf. Dieses ist an einem Ende am Gehäuse fixiert und sorgt für einen Andruck der Vorderseite des Wärmeleiters an die zu messende Oberfläche.

In einer weiteren bevorzugten Weiterbildung werden der Schaltungsträger und das Wärmeleitelement flächig aneinander gedrückt. Die Kraft wird dabei insbesondere so gewählt, dass der Schaltungsträger und der Wärmeleiter innig aneinander liegen und gleichzeitig ein Verschieben des Wärmeleiters gegen den Schaltungsträger möglich ist.

In einer weiteren vorteilhaften Weiterbildung wird der Andruck zwischen Schaltungsträger und Wärmeleiter durch ein federndes Element, das sich im Sensorgehäuse befindet oder von diesem ausgebildet ist, erzeugt.

In einer besonders bevorzugten Ausführungsform ist der Schaltungsträger an der Stirnseite und/oder an der dem Temperatursensor gegenüberliegenden Seite und/oder an den Seitenflächen metallisiert. Durch die Metallisierung wird eine gute Wärmeleitfähigkeit sichergestellt. Die Metallisierung kann hierbei gleichzeitig der elektrischen Kontaktierung des Temperatursensors dienen. Insbesondere kann hierzu die Metallisierung der Stirnseite mit einem Anschluss des Temperatursensors verbunden sein.

In einer Weiterbildung sind in dem Schaltungsträger in der Nähe des Temperatursensors Durchkontaktierungen angebracht. Diese sind für gewöhnlich als metallisierte Bohrungen durch den Schaltungsträger ausgeführt und dienen der elektrischen sowie thermischen Verbindung des Temperatursensors mit der Unterseite des Schaltungsträgers, an der in diesem Fall eine bevorzugt flächige Metallisierung angebracht ist.

In einer bevorzugten Ausführungsform ist auf dem Schaltungsträger zusätzlich eine Auswerteeinheit angebracht, sodass eine gemeinsame Baugruppe sowohl zur Messung als auch zur Auswertung eingesetzt werden kann.

In einer weiteren vorteilhaften Weiterbildung befindet sich auf dem Schaltungsträger in nicht unmittelbarer Nähe der zu messenden Oberfläche ein weiterer Temperatursensor, der näherungsweise die Temperatur des Sensorgehäuses oder des Innenraums ermittelt.

In einer weiteren besonders vorteilhaften Weiterbildung wird der Messwert des Temperatursensors, der sich in unmittelbarer Nähe der zu messenden Oberfläche befindet und dessen Messwert der Temperatur der zu messenden Oberfläche entspricht, mit dem Messwert des zweiten Temperatursensors korrigiert. Dadurch kann der endliche Wärmeleitwert des Wärmeleiters und des Schaltungsträgers ausgeglichen werden.

In einer weiteren bevorzugten Ausführungsform sind auf dem Schaltungsträger weitere Sensoren, insbesondere Temperatursensoren, Feuchtesensoren oder Lichtsensoren, angebracht. Der Schaltungsträger ist in diesem Fall bevorzugt im Innenraum eines Kraftfahrzeugs angebracht und dient zur Messung der Temperatur der Frontscheibe. Hierzu kann sie bevorzugt in einen Rückspiegelfuß als Gehäuse integriert werden. Durch eine gleichzeitige Messung der Temperatur der Scheibenoberfläche, des Innenraumes sowie der Luftfeuchte mit den entsprechenden Sensoren kann die Sensoranordnung beispielsweise zur Messung des Scheibenbeschlags eingesetzt werden.

Weitere Vorteile ergeben sich aus der Beschreibung und den Zeichnungen. Die vorstehend genannten und die noch weiter aufgeführten Merkmale können jeweils einzeln oder in Kombination verwendet werden. Die erwähnten Ausführungsformen sind nicht als abschließende Aufzählung zu verstehen, sondern haben vielmehr beispielhaften Charakter.

Zwei Ausführungsbeispiele der Erfindung sind in der schematischen Zeichnung dargestellt und werden nachfolgend anhand der Figuren der Zeichnung näher erläutert. Es zeigt:
- **Figur 1**: eine Aufsicht einer ersten Sensoranordnung;
- **Figur 2**: eine Seitenansicht der Sensoranordnung nach Figur 1;
- **Figur 3**: einen Schnitt durch die Sensoranordnung nach Figur 2 gemäß III-III;
- **Figur 4**: einen Schnitt durch eine zweite Sensoranordnung.

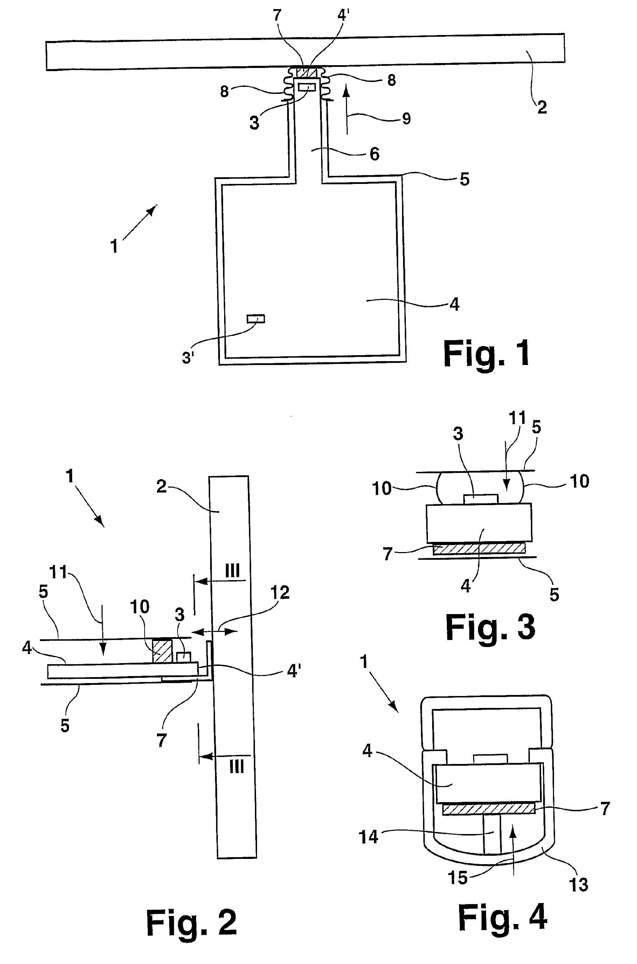

In **Figur 1** ist eine Sensoranordnung **1** zur Temperaturmessung an einer nahezu planen, durch die Frontscheibe **2** eines Kraftfahrzeugs gebildeten Oberfläche gezeigt. Die Sensoranordnung 1 weist einen Temperatursensor **3** auf, der auf einem Schaltungsträger **4** in unmittelbarer Nähe zu einer Stirnseite 4' des Schaltungsträgers 4 angeordnet ist. Die Stirnseite 4' verläuft parallel zur Oberfläche der Frontscheibe 2 entlang eines zungenförmigen Vorsprungs des Schaltungsträgers 4 und ist in unmittelbarer Nähe der Oberfläche der Frontscheibe 2 positioniert. Der Schaltungsträger 4 ist von einem Gehäuse **5** umschlossen, welches an einem in der Figur nicht gezeigten Rückspiegelfuß eines Rückspiegels des Kraftfahrzeugs befestigt wird. Das Gehäuse 5 weist im Bereich des Vorsprungs 6 eine Öffnung auf.

Zwischen dem Schaltungsträger 4 und der Oberfläche der Frontscheibe 2 ist ein flexibles, Wärme leitendes Element **7** angebracht. Das flexible, L-förmige Wärme leitende Element 7 ist einerseits mit dem Schaltungsträger 4 verbunden und liegt andererseits an der Oberfläche der Frontscheibe 2 an. Die Anlage ist mithilfe von Federelementen **8** federnd ausgebildet, so dass das Element 7 in Pfeilrichtung **9** an der Oberfläche der Frontscheibe 2 druckbeaufschlagt anliegt. Dies ermöglicht ein beschädigungsfreies Anpressen der Sensoranordnung 1 an die Oberfläche der Frontscheibe 2 in einer senkrecht zur Oberfläche der Frontscheibe 2 verlaufenden Richtung, sodass der Temperatursensor 3 in einem definierten Abstand zur Oberfläche der Frontscheibe 2 angeordnet werden kann. Das flexible Wärmeleitelement 7 ist so ausgeformt, dass seine Kontaktfläche mit der Oberfläche der Frontscheibe 2 maximal bzw. dass der Luftspalt zwischen dem Wärmeleitelement 7 und der Oberfläche der Frontscheibe 2 minimal ist. Dadurch ist eine gute thermische Kopplung zwischen der Oberfläche der Frontscheibe 2 und dem flexiblen Wärmeleitelement 7 gegeben, die sicherstellt, dass das flexible Wärmeleitelement 7 nahezu die gleiche Temperatur wie die Oberfläche der Frontscheibe 2 aufweist.

Alternativ kann das Wärmeleitelement 7 so ausgeformt sein, dass es nahezu punktförmig an einem oder mehreren Punkten auf der Oberfläche der Frontscheibe 2 aufliegt. Dadurch wird die thermische Kopplung zur Oberfläche der Frontscheibe 2 geringfügig vermindert, aber fertigungsbedingte, d.h. von Scheibe zu Scheibe variierende Unebenheiten der Oberfläche führen nicht zu einer variierenden thermischen Kopplung.

Das Wärmeleitelement 7 ist aus Metall, bevorzugt aus Kupfer oder Aluminium, oder einer Legierung, bevorzugt Messing, hergestellt.

Gemäß **Figur 2** und **Figur 3** werden das Wärmeleitelement 7 und der Schaltungsträger 4 im Bereich des Temperatursensors 3 flächig aneinander gedrückt. Die dazu erforderliche Kraft wird von einem federnden Element geliefert, das als Kunststoffzungen **10** mit am Gehäuse ausgeformt ist. Diese erzeugen eine Kraft in Pfeilrichtung **11,** die einerseits groß genug ist, um einen starken Kontakt zwischen dem Schaltungsträger 4 und dem Wärmeleitelement 7 zu erzeugen. Andererseits ist die Kraft so gewählt, dass die Reibungskraft zwischen dem Schaltungsträger 4 und dem Wärmeleitelement 7 kleiner ist als die Federkraft der Zungen 10, so dass das Wärmeleitelement 7 senkrecht zur Oberfläche der Frontscheibe 2 gemäß Doppelpfeil **12** beweglich ist.

Der Schaltungsträger 4 ist im Bereich der Stirnfläche 4', an der Unterseite sowie den Seitenflächen metallisiert. Hierdurch wird eine besonders gute Wärmeleitung zwischen dem Schaltungsträger 4 und dem Wärmeleitelement 7 sichergestellt. Einer der elektrischen Kontakte des Temperatursensors 3 ist mit der Stirnfläche des Schaltungsträgers 4 elektrisch leitend verbunden. Alternativ kann der elektrische Kontakt auch über Durchkontaktierungen mit der Unterseite des Schaltungsträgers 4 verbunden sein. Hierdurch kann die Temperatur des Temperatursensors 3 besonders gut an die Temperatur des Wärmeleitelements 7 angeglichen werden.

Die in den Figuren gezeigte Sensoranordnung ermöglicht eine Befestigung mittels eines Bajonettverschlusses, da das robuste Wärmeleitelement 7 sicher stellt, dass eine Verschiebung oder Drehung der Sensoranordnung entlang der Oberfläche der Frontscheibe 2 im Regelfall nicht zu einer Beschädigung derselben führt.

Auf dem Schaltungsträger 4 können weitere Sensoren sowie eine Auswerteeinheit angebracht sein. Die weiteren Sensoren können einen Temperatursensor 3' zur Messung der Temperatur des Innenraums sowie einen Luftfeuchtesensor umfassen. Die zwei weiteren Sensoren können zusammen mit dem Temperatursensor zur Messung der Oberflächentemperatur für die Bestimmung der Beschlagsneigung der Frontscheibe eingesetzt werden.

Gemäß Figur 4 (analog zu Figur 3) kann die federnde, druckbeaufschlagte Anlage des Wärmeleitelements 7 an dem Schaltungsträger 4 alternativ auch mithilfe einer elastischen Gehäusemembran **13** ausgebildet sein. Mithilfe der Gehäusemembran 13 wird ein Stift **14** gegen die Unterseite des Wärmeleitelements 7 in Pfeilrichtung **15** gedrückt.

## Patentansprüche

1. Sensoranordnung (1) zur Temperaturmessung der Oberfläche einer Scheibe (2), mit einem auf einem Schaltungsträger (4) angebrachten Temperatursensor (3), mit einem Sensorgehäuse (5) sowie mit der Scheibe (2) mit der zu messenden Oberfläche, wobei der Temperatursensor im Bereich einer Stirnseite (4') des Schaltungsträgers (4) in unmittelbarer Nähe zu der zu messenden Oberfläche positioniert ist, wobei zwischen der zu messenden Oberfläche und dem Schaltungsträger (4) ein flexibles Wärmeleitelement (7) angebracht ist, wobei das Wärmeleitelement (7) und der Schaltungsträger (4) im Bereich des Temperatursensors (3) flächig aneinander gedrückt sind, und wobei der Andruck zwischen dem Schaltungsträger (4) und dem Wärmeleitelement (7) durch ein federndes Element, das sich im Sensorgehäuse (5) befindet oder von diesem ausgebildet ist, erzeugt wird.

2. Sensoranordnung nach Anspruch 1, **dadurch gekennzeichnet, dass** das flexible Wärmeleitelement (7) L-förmig ausgebildet ist und einen mit der zu messenden Oberfläche in Kontakt stehenden Schenkel und einen mit dem Schaltungsträger flächig in Kontakt stehenden Schenkel aufweist.

3. Sensoranordnung nach Anspruch 2, **dadurch gekennzeichnet, dass** die der Oberfläche zugeordnete Vorderseite des flexiblen Wärmeleitelements (7) eine glatte Oberfläche aufweist und zumindest an den Rändern abgerundet ist.

4. Sensoranordnung nach Ansprüchen 2 oder 3, **dadurch gekennzeichnet, dass** das flexible Wärmeleitelement (7) aus einem Wärme leitenden Metall, insbesondere Kupfer oder Aluminium, oder einer Legierung, insbesondere Messing oder Bronze, besteht.

5. Sensoranordnung nach Anspruch 2 bis 4, **dadurch gekennzeichnet, dass** Mittel (8) zur federnden Anlage des flexiblen Wärmeleitelements (7) an der Oberfläche vorgesehen sind.

6. Sensoranordnung nach einem der Ansprüche 2 bis 5, **dadurch gekennzeichnet, dass** der Schaltungsträger (4) und das flexible Wärmeleitelement (7) im Bereich des Temperatursensors (3) flächig aneinander anliegen.

7. Sensoranordnung nach einem der vorhergehenden Ansprüche, **dadurch gekennzeichnet, dass** das Wärmeleitelement (7) in Richtung (12) der Oberfläche verschiebbar angeordnet ist.

8. Sensoranordnung nach einem der vorhergehenden Ansprüche, **dadurch gekennzeichnet, dass** der Schaltungsträger (4) zusätzlich zu den Leiterbahnen für den Temperatursensor (3) an der Stirnseite (4') und/oder an der dem Temperatursensor (3) gegenüberliegenden Seite und/oder an den Seitenflächen metallisiert ist.

9. Sensoranordnung nach Anspruch 8, **dadurch gekennzeichnet, dass** in dem Schaltungsträger (4) in der Nähe des Temperatursensors (3) Durchkontaktierungen angebracht sind.

10. Sensoranordnung nach einem der vorhergehenden Ansprüche, **dadurch gekennzeichnet, dass** auf dem Schaltungsträger (4) zusätzlich eine Auswerteeinheit angebracht ist.

## Claims

1. Sensor arrangement (1) for measuring the temperature of the surface of a screen (2), comprising a temperature sensor (3) mounted to a circuit carrier (4), a sensor housing (5) as well as the screen (2) with the surface to be measured, wherein the temperature sensor is positioned in the area of an end face (4') of the circuit carrier (4) in the direct vicinity of the surface to be measured, wherein a flexible heat conducting element (7) is mounted between the surface to be measured and the circuit carrier (4), wherein the heat conducting element (7) and the circuit carrier (4) are flatly pressed against each other in the area of the temperature sensor (3) and wherein the pressure between the circuit carrier (4) and the heat conducting element (7) is generated by a resilient element which is located in the sensor housing (5) or is formed by the sensor housing.

2. Sensor arrangement according to claim 1, **characterized in that** the flexible heat conducting element (7) is L-shaped and has a leg which is in contact with the surface to be measured and a leg which is in flat contact with the circuit carrier.

3. Sensor arrangement according to claim 2, **characterized in that** the front side of the flexible heat conducting element (7) associated with the surface has a smooth surface and is rounded at least at the edges.

4. Sensor arrangement according to claims 2 or 3, **characterized in that** the flexible heat conducting element (7) consists of a heat conducting metal, in particular copper or aluminium, or an alloy, in particular brass or bronze.

5. Sensor arrangement according to claims 2 to 4, **characterized in that** means (8) for resilient abutment of the flexible heat conducting element (7) are provided on the surface.

6. Sensor arrangement according to any one of the claims 2 to 5, **characterized in that** the circuit carrier (4) and the flexible heat conducting element (7) flatly abut one another in the area of the temperature sensor (3).

7. Sensor arrangement according to any one of the preceding claims, **characterized in that** the heat conducting element (7) is disposed such that it can be displaced in the direction (12) of the surface.

8. Sensor arrangement according to any one of the preceding claims, **characterized in that** the circuit carrier (4) is metalized on the end face (4') and/or on the side opposite to the temperature sensor (3) and/or on the side surfaces in addition to the conductor paths for the temperature sensor (3).

9. Sensor arrangement according to claim 8, **characterized in that** through-connections are provided in the circuit carrier (4) in the vicinity of the temperature sensor (3).

10. Sensor arrangement according to any one of the preceding claims, **characterized in that** an evaluation unit is additionally provided on the circuit carrier (4).

## Revendications

1. Dispositif de détection (1) pour mesurer la température de la surface d'une vitre (2), avec un capteur de température (3) disposé sur un support de circuit (4), avec un boîtier de capteur (5) ainsi qu'avec la vitre (2) présentant la surface à mesurer, le capteur de température étant positionné dans la zone d'une face frontale (4') du support de circuit (4) à proximité immédiate de la surface à mesurer, un élément thermoconducteur flexible (7) étant disposé entre la surface à mesurer et le support de circuit (4), l'élément thermoconducteur (7) et le support de circuit (4) étant pressés à plat l'un contre l'autre dans la zone du capteur de température (3) et la pression d'application entre le support de circuit (4) et l'élément thermoconducteur (7) étant produite par un élément faisant ressort qui se trouve dans le boîtier de capteur (5) ou qui est formé par celui-ci.

2. Dispositif de détection selon la revendication 1, **caractérisé en ce que** l'élément thermoconducteur flexible (7) est réalisé en forme de L et présente une branche en contact avec la surface à mesurer et une branche en contact plan avec le support de circuit.

3. Dispositif de détection selon la revendication 2, **caractérisé en ce que** la face avant de l'élément thermoconducteur flexible (7) associée à la surface présente une surface lisse et est arrondie au moins aux bords.

4. Dispositif de détection selon les revendications 2 ou 3, **caractérisé en ce que** l'élément thermoconducteur flexible (7) est constitué d'un métal conducteur de la chaleur, en particulier de cuivre ou d'aluminium, ou d'un alliage, en particulier de laiton ou de bronze.

5. Dispositif de détection selon les revendications 2 à 4, **caractérisé en ce que** des moyens (8) pour l'appui élastique de l'élément thermoconducteur (7) sont prévus á la surface.

6. Dispositif de détection selon l'une des revendications 2 à 5, **caractérisé en ce que** le support de circuit (4) et l'élément thermoconducteur flexible (7) sont en appui plan l'un contre l'autre dans la zone du capteur de température (3).

7. Dispositif de détection selon l'une des revendications précédentes, **caractérisé en ce que** l'élément thermoconducteur (7) est disposé de façon à pouvoir coulisser en direction (12) de la surface.

8. Dispositif de détection selon l'une des revendications précédentes, **caractérisé en ce que** le support de circuit (4), en plus des pistes conductrices pour le capteur de température (3), est métallisé sur la face frontale (4') et/ou sur la face opposée au capteur de température (3) et/ou sur les faces latérales.

9. Dispositif de détection selon la revendication 8, **caractérisé en ce que** des trous métallisés sont réalisés dans le support de circuit (4) à proximité du capteur de température (3).

10. Dispositif de détection selon l'une des revendications précédentes, **caractérisé en ce qu'**une unité d'évaluation est disposée en plus sur le support de circuit (4).
